# EUROPEAN PATENT SPECIFICATION

(11) **EP 2 693 093 B1**
(45) Date of publication and mention of the grant of the patent: **29.03.2017**
(21) Application number: 13176296.5
(22) Date of filing: 12.07.2013
(51) Int. Cl.: F16L 25/14

(54) **Hydraulic valve or fitting comrising and adapter element**
Hydraulikventil oder Fitting mit einem Adapter
Soupape hydraulique ou raccord avec adapteur

(30) Priority: 02.08.2012 IT MI20121375
(43) Date of publication of application: 05.02.2014
(73) Proprietor: I.V.A.R. S.P.A., 25080 Prevalle (BS) (IT)
(72) Inventor: Bertolotti, Umberto, 25080 Prevalle (BS) (IT); Bertolotti, Stefano, 25080 Prevalle (BS) (IT)
(74) Representative: Galassi, Alessandro

(56) References cited:
- EP-A1- 2 327 841
- AU-A- 3 518 171
- DE-U1- 9 011 603
- US-A- 5 253 900
- US-A1- 2005 099 008
- US-A1- 2008 079 258
- US-A1- 2008 296 892

## Description

The present relates to a valve or a fitting comprising an adapter element and a method for modifying and selecting the diameters of the openings of a valve or a fitting and is particularly applicable to the field of hydraulic heating plants, sanitary appliances, civil and industrial applications.

In the sector of fluid transport and dispensing, in particular water, the prior art comprises the use of a large variety of valves and fittings. The elements are interposed between tubes and devices and enable control and regulation of the plant as well as realizing the necessary connections.

For example, in civil plant for heating water or for sanitary use, the plants widely use two or three-way valves for controlling dispensing of water from and to user devices such as radiators, heat conveyors, taps. These valves can be of the type known as thermostatable, i.e. valves provided with a valve body that houses internally thereof a special regulating element (known as a flow-adjustment screw) and are predisposed for mounting a thermostat head; the valve automatically regulates the flow of hot water, opening and closing by the action of the thermostat head. It is also possible to assemble, on the thermostatable valves, a handle for manual control of the flow. Other types of valve are the "drain-off' valves, i.e. valves for regulating the flow of water located typically at the outlet of a radiator.

Valves and fittings have in common the presence of at least an inlet opening and an outlet opening, through which the fluid of the plant flows. The Applicant has found that valves and fittings of known type like for example shown in AU 35181/71 are not free of drawbacks and can be improved in various ways.

Consider, in this matter, that a specific valve, or a specific fitting, typically exhibits its two or more openings both or all of the same rated diameter: this derives from the fact that the specific valve or the specific fitting are identified, among other things, by the diameter of the openings, which indicate to the installer which diameter of tube or fitting the particular valve or fitting is destined to be used for. Further, the balancing of the conduits of the plant require identical diameters between the inlet and outlet of a valve. This means that - for example - a valve with a ½" coupling is connectable to tubes and fittings of ½" and, in a dual way, to portions of plant in which all the tubes and fittings have a ½" diameter. The situation is entirely normal in the field of hydraulic plant, and however represents a limitation as any tube, fitting, conduit, terminal of a user device that is to be connected to a valve, or to a fitting, requires selection of a valve, or a fitting, having a corresponding rated diameter.

This drawback, identified by the Applicant, leads to a series of disadvantages that are extremely significant. Primarily, it should be considered that the rated diameters of valves, fittings and tubes are defined by standard tables and standards in the sector. This obliges producers, sales representative, installers and - in general - each operator in the sector, to have available a large quantity of valves and fittings so as to be able to satisfy any sales need, for each type of valve or fitting, a series of articles that are different only in the rated diameter of the two inlet/outlet openings. In the same way, in order to consider itself complete, a warehouse or a sales outlet offering valves and fittings must necessarily contain a large quantity of articles, as for each type of valve and fitting all the different diameters of the openings have to be ordered and stocked (including diameters that are not widely available).

A further drawback relates to the difficulty for the user of the valve or the fitting, especially if not specialised, in selecting the correct valve or fitting, i.e. which suits the particular requirement or which can be adapted to the characteristics of the plant it is intended for.

In this situation the aim underpinning the present invention, in the various aspects and/or embodiments thereof, is to disclose a valve or a fitting comprising an adapter element and a method for modifying and selecting diameters of the openings of a valve or fitting, which are able to obviate one or more of the cited drawbacks.

A further aim of the present invention is to provide, a valve or a fitting comprising an adapter element and a method for modifying and selecting the diameters of the openings of a valve or fitting, able to reduce, for each type of valve or fitting, the variety of articles - differing exclusively in the diameter of the relative openings - which it is necessary to have available in order to obtain a complete series.

A further aim of the present invention is to provide a relative valve or fitting comprising an adapter element able to reduce the costs and/or spaces connected to a warehouse or a sales outlet of hydraulic valves and fittings, and in general connected to the production and/or distribution of material for hydraulic plants.

A further aim of the present invention is to make available a valve or a fitting comprising an adapter element and a method for modifying and selecting the diameters of the openings of a valve or fitting able to simplify the selection and/or buying and/or use of a valve or fitting by an installer or final user.

A further aim of the present invention is to make available a valve or a fitting comprising an adapter element and a method for modifying and selecting the diameters of the openings of a valve or fitting, able to make a valve or a fitting more flexible in use, so that a greater number of uses are possible with tubes, fittings and devices of a hydraulic plant.

A further aim of the present invention is to provide a fitting comprising an adapter element characterised by a simple and/or rapid and/or economic realisation.

These aims, and others besides, which will more fully emerge during the course of the following description, are substantially attained by a valve or a fitting comprising an adapter element and a method for modifying and selecting diameters of the openings of a valve or fitting according to one or more of the appended claims, each of which can be taken alone (without the relative dependent claims) or in any combination with the other claims, as well as the following aspects and/or embodiments, variously combined, including with the above-mentioned claims.

The Applicant believes that the combination of the technical characteristics enables obtaining numerous advantages. Primarily, the adapter element described enables simply, rapidly and reversibly selecting and modifying the diameter of the openings of a valve or fitting with a pair of values. This enables adapting a same valve or fitting to different hydraulic plants and different components (such as tubes, fittings, heaters etc.). Further, the present invention advantageously enables reducing the number of codes in the warehouse (i.e. the number of different articles present for each valve or fitting), thus eliminating articles that are functionally identical but different only in terms of the diameter of the openings, as the same valve or fitting is characterised by a pair of possible rated diameters.

Further, the invention enables having available valves and fittings able to facilitate the selection and buying operations of a valve, as it is not necessary to know precisely which piping, fitting or hydraulic device the valve will be coupled to. This simplification is even more relevant with reference to non-specialised users and for material bought for domestic plants. The above advantages make the present invention advantageously applicable to the large-distribution market, typically characterised by large warehouses and non-specialised users.

Further characteristics and advantages will more fully emerge from the detailed description that follows of some embodiments, among which also a preferred embodiment, by way of non-exclusive examples, of an adapter element for valves and fittings, and a valve comprising the adapter element, according to the present invention. This description will be made in the following with reference to the appended drawings, provided only by way of non-limiting example, in which:

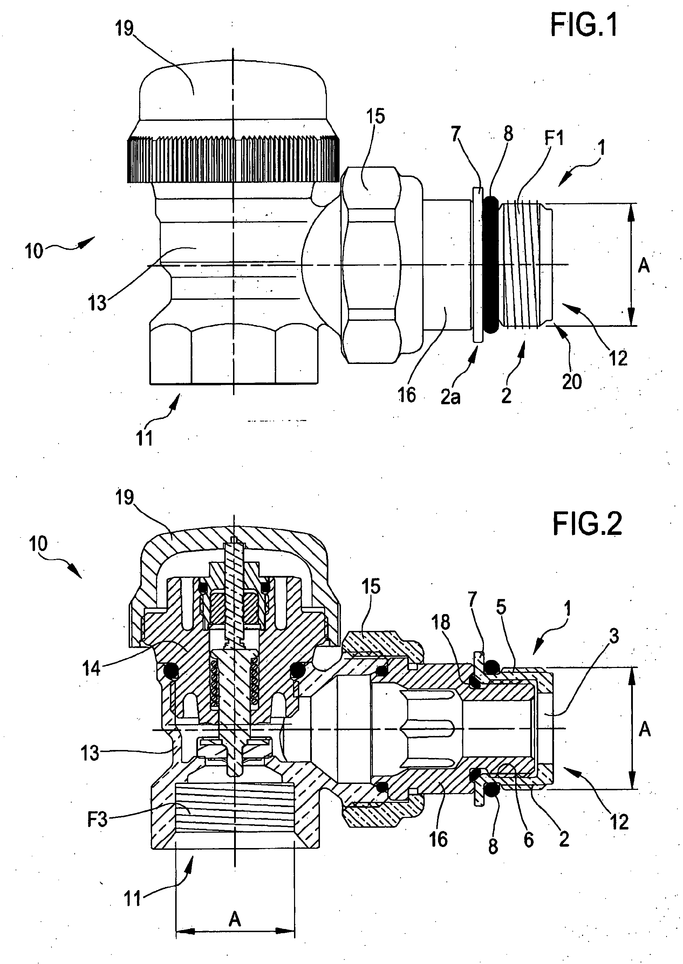

- figure 1 is a lateral view of a possible embodiment of an adapter element according to the present invention, associated to an embodiment of a valve according to the present invention, the adapter being in a first operating configuration;
- figure 2 is a lateral section view of the adapter element and the valve of figure 1;

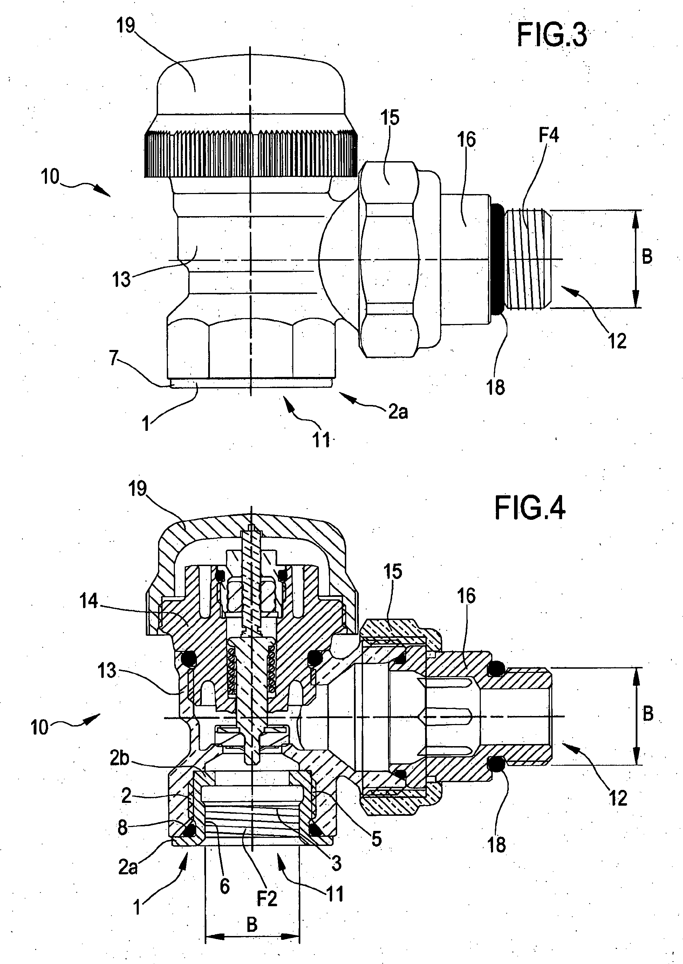

- figure 3 is a lateral view of an adapter element according to the present invention and the valve of figure 1, wherein the adapter element is in a second operating configuration;
- figure 4 is a lateral section view of the adapter element and the valve of figure 3;
- figure 5 is a perspective view, partially exploded, of an adapter element of a valve according to the present invention, and schematically illustrates the passage of the adapter element between the first and the second operating configuration.

With reference to the figures of the drawings, number 1 denotes in its entirety an adapter element for valves or fitting according to the present invention.

The adapter element 1 is destined to be used with valves 10, or hydraulic fittings, being at least two-way (i.e. provided with at least two inlets/outlets), connected to tubes or user devices and between which there is a passage of fluid, typically water. In the case of a valve, the fluid passage (for example in terms of flow) occurs in a controlled way, for example on the basis of the temperature of the fluid. In the case of a fitting, on the other hand, there are no regulating organs or control between the two inlets/outlets.

The adapter element 1 is thus predisposed to operate with valves and fittings equipped with at least a first opening 11, internally exhibiting a first diameter A, and a second opening 12, externally exhibiting a second diameter B (indicated in the figures). The adapter element 1 is selectively and removably couplable to the first opening or the second opening of the valve or fitting in such a way that, as a result of the coupling of the adapter element, the first 11 and the second opening 12 both exhibit, respectively, the second diameter B or the first diameter A.

The adapter element 1 comprises a tubular body 2 provided with a through cavity 3 which extends longitudinally between a first end 2a and a second end 2b of the tubular body. The tubular body is externally equipped with first coupling means 5, of a diameter corresponding to the first diameter A, and internally of second coupling means 6 of diameter corresponding to the second diameter B. The first coupling means 5 are configured so as to couple removably internally to the first opening 11 of the valve 10 or fitting in such a way that the adapter element 1 is associated to the first opening and the first opening exhibits, following the coupling with the adapter element, an internal diameter equal to the second diameter B and defined by the second coupling means 6, while the second opening 12 continues to exhibit the second externally diameter B. The second coupling means 6 are configured to couple removably externally to the second opening 12 of the valve or fitting in such a way that the adapter element 1 is associated to the second opening and the second opening exhibits, following the coupling with the adapter element, an external diameter equal to the first diameter A and defined by the first coupling means, while the first opening 11 continues to internally exhibit the first diameter A.

As shown in the figures, preferably the first 5 and the second coupling means 6 comprise a respective thread: in detail the first and second coupling means 5 and 6 preferably comprise respectively an external thread F1 (or male screw) and an internal thread F2 (nut screw or female). The external thread F1 is preferably formed on the external surface of the tubular body 2, or alternatively can be realized on an externally-wound insert, and fixed to the tubular body. The internal thread F2 is preferably realized in the through-cavity 3 of the tubular body, or alternatively can be realized on an insert inserted in the through-cavity.

In substance, the adapter element 1 assumes an internally-threaded (with female thread) and externally-threaded (with male thread) sleeve conformation also having a hollow cylinder shape.

As in the embodiment illustrated by way of example in the figures, the first diameter A is greater than the second diameter B. The first A and the second diameter B have a respective value selected from among the standard diameters used in hydraulic systems: 1/2" 1/4", 3/4", 3/8", 1". The first diameter A and the second diameter B represent a pair of diameters selected from among the following pairs of diameters: 1/2 "x 3/8", 1/2 "x 1/4", 3/4 "x 1 / 2 ", 1" x 1/2", 3/4 "x 3/8", 3/4 "x 1/4", 3/8 "x 1/4", 1 "x 3/4" (expressed in inches).

The present invention applies identically to each possible combination A-B of the first and second diameter, although not specifically indicated. For example, the first and the second diameter can coincide with standard diameters defined by the DIN or BSP tables, expressed in both inches and in millimetres.

The first diameter A and the second diameter B preferably coincide with a pair of consecutive diameters of standard pipes and fittings. This means that between the first and the second diameter there is a "jump" of a single standard diameter. For example, the first and the second diameter can advantageous correspond to the diameters 1/2" and 3/8", widely used in the technical field of sanitary plumbing and heating.

The first opening and the second opening are input/output openings suitable for allowing passage of a fluid, in particular water, through the valve 10 or fitting. The first opening 11 is preferably destined to be connected to a pipe (not shown) connected to a water supply or to a heating network so as to receive water from it, and the second opening 12 is destined to be connected to a user device (not shown), for example a heater or a heat convector or a radiator, so as to supply it with the water received in inlet from the first opening. The first opening 11 and second opening 12 respectively preferably comprise an internally-threaded fitting F3 and an externally-threaded fitting F4, or vice versa, each intended to be connected to a respective piping or duct mouth.

The tubular body 2 preferably exhibits a collar 7 which extends radially outwardly preferably at the first end 2a (as shown in the figures) or the second end 2b of the tubular body. The adapter element 1 preferably comprises a first seal element 8 enveloped externally on the tubular body, preferably at the collar. The first seal element is structured so as to ensure a fluid-tight connection between the first coupling means 5 and the first opening 11 when the adapter element is internally coupled to the first opening of the valve or fitting, or to guarantee a fluid-tight sealed connection between the first coupling means 5 and the inside of a pipe coupled thereto, when the adapter element is coupled externally to the second opening 12 of the valve or fitting. The first seal element is preferably a gasket (e.g. rubber or plastic) or an O-ring.

The first seal element 8 is - in use - interposed between the first coupling means 5 and the first opening 11 when the adapter element is internally coupled to the first opening, or interposed between the first coupling means and the interior of a tubing couplable thereto, when the adapter element is externally coupled to the second opening of the valve or fitting. In both cases, the first seal element is - in use - deformable by effect of the pressure between the exterior of the adapter element and the interior of the pipe or between the exterior of the adapter element and the interior of the first opening; the compression and consequent deformation inhibits fluid communication between the inside of the conduits between which the sealing element is interposed and the outside.

The above-mentioned collar 7 preferably extends radially, in a plane that is perpendicular to the longitudinal development of the tubular body 2, from the first end 2a of the adapter element. In this way, when the adapter element is inserted into the first opening, it acts as a endrun limiter abutting on an edge of the first opening itself; the collar protrudes from the first end and acts as a grip portion for decoupling the adapter element by before opening. When, instead, the adapter element is inserted in the second opening, the collar acts as an endrun limiter for a pipe externally fitted to the adapter element itself or to a coupling coupled to the first coupling means.

The adapter element, as illustrated by way of example in the figures, can comprise a further collar that extends perpendicularly to the longitudinal development of the tubular body, radially inwardly of the body itself at the second end; by way of example, the additional collar internally defines a hexagonal opening.

The embodiment shown by way of example in the figures shows an adapter element 1 according to the present invention associated to a thermostatic valve 10. This valve has a valve body 13 having a first opening 11 having an internal diameter A and a second opening 12 having an external diameter B. In the illustrated embodiment, the two openings 11 and 12 are arranged perpendicularly to one another.

The valve 10 can comprise, in certain applications, a protective hood 19 (optionally equipped with a knurled outer grip); this hood protects the underlying spindle 14 and is typically removed for installation of the thermostatic head.

The valve 10 preferably comprises a valve device 14, or flow-adjustment screw 14 (this is the actual valve), housed internally of the body 13 of the valve and able to regulate the flow of fluid, in particular water, passing through the valve body from the first opening 11 to the second opening 12 (and possibly vice versa).

In use, the valve illustrated by way of example in the figures is typically installed in a radiator, in which case the first opening 11 is connected to a pipe of the heating system (typically emerging from a wall) to receive therefrom a flow of hot water, while the second opening 12 is engaged in the radiator, to provide a stream of hot water in inlet. In substance, the first opening 11 is configured as a water inlet and the second opening 12 is configured as an outlet (towards a user).

The valve shown in the figures is only a possible example of a valve according to the present invention, and is illustrated in non-limiting way.

With reference to a valve, 10, the adapter element 1 can be selectively placed in a first configuration, in which it is removably and internally coupled to the first opening in such a way that the first and the second opening of the valve body both exhibit the second diameter B, or in a second configuration, in which the adapter element 1 is removably and externally coupled to the second opening in such a way that the first and the second opening of the valve body both exhibit the first diameter A. The adapter element 1 is selectively removable from, and reassemblable to, the first or second opening so as to switch from the first to the second operating configuration or vice versa.

Preferably, as shown by way of example in the figures, the valve or fitting body comprises a second sealing element 18 wound externally to the second opening 12 exhibiting the diameter B. The second sealing element is structured to ensure a fluid-tight connection between the second opening and the interior of a pipe coupled thereto, when the adapter element is in the first configuration, or to ensure a fluid-tight connection between the second coupling means, having the second diameter, and the second opening when the adapter element is in the second configuration.

The second sealing element is preferably a seal 18 (e.g. made of rubber or plastic) or an O-ring. The second sealing element 18 is preferably of the same type as the first sealing element 8, with the difference of having a smaller diameter (substantially the second sealing element has a diameter smaller than the first by an amount equal to the difference between the first and second diameter A and B).

The second sealing element 18 is fitted on the second opening. Therefore - in use - it is interposed between the second opening and the interior of a pipe coupled to it when the adapter element is in said first configuration, or interposed between the second coupling means and the second opening when the adapter element is in said second configuration. In both cases, the second sealing element is - in use - deformable due to the pressure between the outside of the second opening and the interior of the pipe connected to it, or between the outside of the second opening and the interior of the adapter element; this compression and consequent deformation inhibits fluid communication between the interior of the conduits between which the sealing element is interposed and the outside environment.

The second sealing element 18 is preferably wound externally of the second opening 12, is axially positioned in such a way that - in use - it is positioned at the collar 7 of the adapter element 1, The adapter element 1 and the valve 10 of the present invention can be realised and used even without the use of gaskets between the connecting means and the openings. For example, the connecting means can independently carry out a fluid-tight connection. Alternatively, in the case (shown in the figures) of threaded connection means, it is possible to use (for the sealing) suitable materials such as Teflon or tow, wrapped around the various threads.

The valve preferably comprises, at the first and/or the second opening, further coupling means (optional) for enabling the connection of pipes or fittings to the valve openings. For example, as shown by way of example in the figures, the second opening comprises a mouth 16, mounted to the body 13 of the valve by means of a threaded nut 15; the mouth enables connection of the second opening of the valve to an inlet of a radiator, heater or the like. In substance, the second opening 12 of the valve 10 may be located directly on the body 13 of the valve or can be made via a mouth 16 (fastened by a nut to the valve body or made in a single piece with the valve body).

The method of changing selection of the diameters of the openings of a valve or fitting, in accordance with the present invention, comprises the steps of:
- providing a valve 10 or fitting of the type described above;
- preparing an adapter element 1 as described above;
- selectively placing the adapter element 1 in a first configuration, in which it is removably and internally coupled to the first opening 11 such that the first and the second opening of the valve body exhibit both the second diameter B, or in a second configuration, in which it is removably and externally coupled to the second opening in such a way that the first and the second opening of the valve body both exhibit the first diameter A.

Where appropriate, in order to vary the diameter of the first and second opening from the first diameter A to the second diameter B or vice versa, the method can include a step of removing the adapter element 1 from the body 13 of the valve or fitting and returning it into the first configuration or the second configuration.

The step of selectively placing the adapter element and/or the step of removing the adapter element are preferably carried out by means of operations of unscrewing, screwing, assembly, de-assembly, engaging or release of the adapter element to - or from - the first or second opening of the valve or fitting; this depends on the type of first and second coupling means employed. In the embodiment shown in the figures, the coupling means comprise threads, so the above steps are made by screwing and unscrewing the threads of the adapter element. The placing and removal of the adapter element on and from the first and second opening can be performed manually or by means of tools (such as a wrench or pliers).

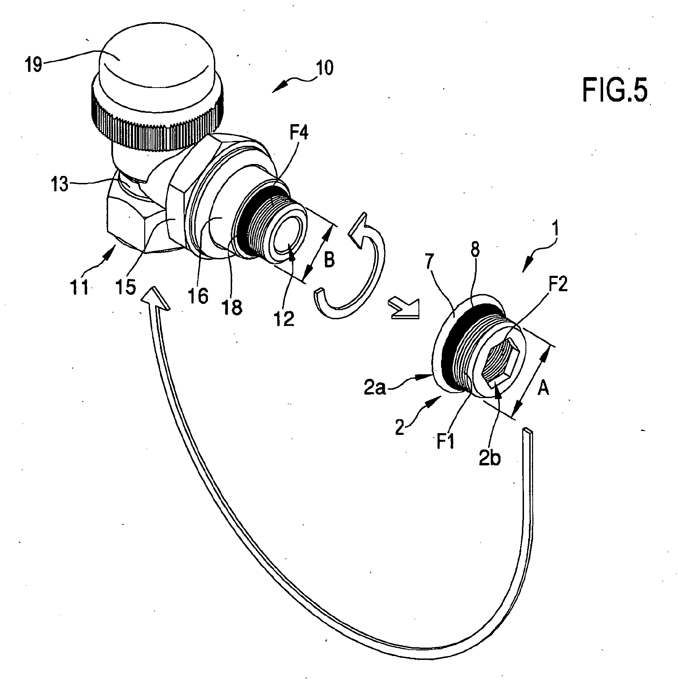

The above method is schematically illustrated in figure 5: it can be observed that the adapter element, previously in the second configuration (i.e. associated to the second opening 12 in such a way that both openings 11 and 12 have a diameter equal to the first diameter A), can be unscrewed from the external thread F4 of the second opening, removed from it and returned - by screwing on the internal thread F3 of the first opening - into the first configuration (i.e. associated with the first opening 11 in such a way that both openings 11 and 12 have a diameter equal to the second diameter B).

## Claims

1. A valve (10) or fitting comprising:
- a body (13) of the valve or the fitting provided at least with a first opening (11) internally exhibiting a first diameter (A) and with a second opening (12) externally exhibiting a second diameter (B),
- an adapter element (1) removably and selectively couplable to said first opening (11) or to said second opening (12) of the valve (10) or fitting,
**characterized in that** said adapter element can be selectively located in a first configuration, in which it is coupled, in a removable way, internally to said first opening (11) in such a way that the first and the second opening of the valve body both exhibit said second diameter (B), or in a second configuration, in which it is coupled, in a removable way, externally to said second opening (12) in such a way that the first and the second opening of the valve body both exhibit said first diameter (A),
said adapter element (1) being selectively demountable from, and remountable to, said first opening (11) or said second opening (12) such as to pass from said first to said second operative configuration or vice versa.

2. The valve (10) or fitting of the preceding claim, wherein the second diameter (B) is smaller than the first diameter (A).

3. The valve (10) or fitting of claim 1 or 2, wherein the adapter element (1) comprises a tubular body (2) provided with a through-cavity (3) extending longitudinally between a first end (2a) and a second end (2b) of the tubular body, said tubular body being externally provided with first coupling means (5), having a diameter corresponding to the first diameter (A), and internally with second coupling means (6) having a diameter corresponding to the second diameter (B), wherein said first coupling means (5) are configured for internally coupling, in a removable way, to said first opening (11) of the valve or the fitting in such a way that the adapter element is associated to said first opening and the first opening exhibits, as a result of the coupling with said adapter element, an internal diameter equal to said second diameter (B) and defined by said second coupling means (6), said second opening continuing to externally exhibit said second diameter (B), and wherein said second coupling means (6) are configured for externally coupling, in a removable way, to said second opening (12) of the valve or the fitting in such a way that said adapter element is associated to said second opening and the second opening exhibits, as a result of the coupling with said adapter element, an external diameter equal to said first diameter (A) and defined by said first coupling means (5), said first opening continuing to internally exhibit said first diameter (A), said adapter element (1) being selectively couplable to said first opening (11) or to said second opening (12) of the valve or fitting.

4. The valve (10) or fitting of the preceding claim, wherein said first coupling means (5) and/or second coupling means (6) comprise a respective thread, preferably comprise respectively an external thread (F1) and an internal thread (F2).

5. The valve (10) or fitting of claim 3 or 4, wherein the first coupling means and/or the second coupling means comprise a snap-fit coupling.

6. The valve (10) or fitting of any one of the preceding claims, wherein said first (A) and second diameter (B) have a respective value that is selected from among the standard diameters used in hydraulic plant 12,7mm (1/2"), 6,35mm (1/4"), 19,05mm (3/4"), 9,525mm (3/8"), 25,4mm (1") 1/2", 1/4", 3/4". 3/8". 1".

7. The valve (10) or fitting of any one of the preceding claims, wherein said first diameter (A) and said second diameter (B) represent a pair of diameters selected from among the following pairs of diameters: 12,7mm x 9,525mm (1/2" x 3/8"), 12,7mm x 6,35mm (1/2" x 1/4"), 19,05mm x 12,7mm (3/4" x 1/2"), 25,4mm x 12,7mm (1" x 1/2"), 19,05mm x 9,525mm (3/4" x 3/8"), 19,05mm x 6,35mm (3/4" x 1/4"), 9,525mm x 6,35mm (3/8" x 1/4"), 25,4mm x 19,05mm (1" x 3/4").

8. The valve (10) or fitting of any one of the preceding claims, wherein said first opening (11) and said second opening (12) are inlet/outlet openings suitable for enabling passage of a fluid, in particular water, through said valve (10) or fitting.

9. The valve (10) or fitting of any one of the preceding claims, wherein said first opening is suitable for being connected to a pipe connected to a water grid supply or to a heating grid source for receiving water there-from and said second opening is destined to be connected to a user device, for example a heating system or a convector heater or a radiator, such as to supply it with the water received in inlet by the first opening.

10. The valve (10) or fitting of any one of the preceding claims, said first opening and said second opening respectively comprise an internally-threaded connection (F3) and an externally-threaded connection (F4), or vice versa, each destined to be connected to a respective pipe or mouth, and/or wherein said first diameter (A) and said second diameter (B) correspond to the diameter of pipes engageable in said first opening and/or said second opening.

11. The valve (10) or fitting of any one of the preceding claims, wherein said tubular body (2) exhibits a collar (7) extending radially from the tubular body towards the outside, preferably in correspondence of the first end (2a) or the second end (2b) of the tubular body, and/or wherein the adapter element comprises a first seal element (8) wound externally of the tubular body (2), preferably in correspondence of said collar (7), said first seal element (8) being structured such as to guarantee a fluid-sealed connection between the first coupling means (5) and the first opening (11) when the adapter element is coupled internally to said first opening of the valve or the fitting, or for guaranteeing a fluid-sealed connection between the first coupling means (5) and the inside of a pipe couplable thereto, when the adapter element is externally coupled to said second opening (12) of the valve or fitting, said first seal element (8) being preferably a gasket or an O-ring.

12. The valve (10) or fitting of any one of the preceding claims, wherein said body (13) of the valve or fitting comprises a second seal element (18) externally enveloping the second opening (12) externally exhibiting said second diameter (B), said second seal element (18) being structured such as to guarantee a fluid-sealed connection between the second opening (12) and the inside of a piping coupled thereto, when the adapter element is in said first configuration, or to guarantee a fluid-sealed connection between the second coupling means (6), having said second diameter, and the second opening (12) when the adapter element is in said second configuration, said second seal element (18) being preferably a gasket or an O-ring.

13. The valve (10) or fitting of any one of the preceding claims, wherein said valve is an at least two-way valve or a thermostatable valve or a manual valve or a drain-off valve or an at least two-way fitting, and/or wherein said valve or fitting is of a hydraulic type.

14. The valve (10) or fitting of any one of the preceding claims, wherein said valve comprises a valve device (14), or a screw-type device, internally housed in said body (13) of the valve and configured and predisposed for regulating the flow of a fluid, in particular water, passing through said body of the valve from said first opening (11) to said second opening (12) and /or vice versa.

15. A method for modifying and selecting the opening diameters of a valve (10) or fitting, comprising steps of:
- predisposing a valve (10) or a fitting according to any one of the preceding claims;
- selectively locating said adapter element (1) in a first configuration, in which it is coupled, in a removable way, internally to the first opening (11) in such a way that the first and the second opening of the valve body both exhibit the second diameter (B), or in a second configuration, in which it is coupled, in a removable way, externally to the second opening (12) in such a way that the first and the second opening of the valve body both exhibit the first diameter (A) and
- in order to modify the diameter of the first opening and the second opening from the first diameter (A) to the second diameter (B) or vice versa, possibly removing said adapter element (1) from the body (13) of the valve or the fitting and re-locating said adapter element (1) in said first configuration or said second configuration.

## Patentansprüche

1. Ventil (10) oder Fitting, welches aufweist:
- einen Körper (13) des Ventils oder des Fittings, der mit zumindest einer ersten Öffnung (11), die innen einen ersten Durchmesser (A) aufzeigt, und mit einer zweiten Öffnung (12), die außen einen zweiten Durchmesser (B) aufweist, versehen ist,
- ein Adapterelement (1), das mit der ersten Öffnung (11) oder der zweiten Öffnung (12) des Ventils (10) oder Fittings entfernbar und selektiv koppelbar ist,
**dadurch gekennzeichnet, dass** das Adapterelement selektiv in einer ersten Konfiguration angeordnet werden kann, in der es in entfernbarer Weise innen mit der ersten Öffnung (11) derart gekoppelt ist, dass die erste und die zweite Öffnung des Ventilkörpers beide den zweiten Durchmesser (B) aufzeigen, oder in einer zweiten Konfiguration, in der es in entfernbarer Weise außen mit der zweiten Öffnung (12) derart gekoppelt ist, dass die erste und die zweite Öffnung des Ventilkörpers beide den ersten Durchmesser (A) aufzeigen,
wobei das Adapterelement (1) von der ersten Öffnung (11) oder der zweiten Öffnung (12) selektiv abnehmbar und daran wieder anbringbar ist, so dass es von der ersten zur zweiten Betriebskonfiguration oder umgekehrt verläuft.

2. Das Ventil (10) oder Fitting des vorhergehenden Anspruchs, wobei der zweite Durchmesser (B) kleiner als der erste Durchmesser (A) ist.

3. Das Ventil (10) oder Fitting von Anspruch 1 oder 2, wobei das Adapterelement (1) einen rohrförmigen Körper (2) aufweist, der mit einem Durchgangsraum (3) versehen ist, der sich längs zwischen einem ersten Ende (2a) und einem zweiten Ende (2b) des rohrförmigen Körpers erstreckt, wobei der rohrförmige Körper außen mit ersten Kupplungsmitteln (5) versehen ist, deren Durchmesser dem ersten Durchmesser (A) entspricht, und innen mit zweiten Kupplungsmitteln (6), deren Durchmesser dem zweiten Durchmesser (B) entspricht, wobei die ersten Kupplungsmittel (5) zur entfernbaren internen Kopplung mit der ersten Öffnung (11) des Ventils oder Fittings konfiguriert sind, derart, dass das Adapterelement der ersten Öffnung zugeordnet ist, und die erste Öffnung, infolge der Kupplung mit dem Adapterelement, einen Innendurchmesser aufzeigt, der gleich dem zweiten Durchmesser (B) ist und durch die zweiten Kupplungsmittel (6) definiert ist, wobei sich die zweite Öffnung fortsetzt, um außen den zweiten Durchmesser (B) aufzuzeigen, und wobei die zweiten Kupplungsmittel (6) zur entfernbaren externen Kupplung mit der zweiten Öffnung (12) des Ventils oder Fittings konfiguriert sind, derart, dass das Adapterelement der zweiten Öffnung zugeordnet ist, und die zweite Öffnung, infolge der Kupplung mit dem Adapterelement, einen Außendurchmesser aufzeigt, der gleich dem ersten Durchmesser (A) ist und durch die ersten Kupplungsmittel (5) definiert ist, wobei sich die erste Öffnung fortsetzt, um innen den ersten Durchmesser (A) aufzuzeigen, wobei das Adapterelement (1) mit der ersten Öffnung (11) oder der zweiten Öffnung (12) des Ventils oder Fittings selektiv koppelbar ist.

4. Das Ventil (10) oder Fitting vom vorhergehenden Anspruch, wobei die ersten Kupplungsmittel (5) oder zweiten Kupplungsmittel (6) ein jeweiliges Gewinde aufweisen, bevorzugt jeweils ein Außengewinde (F1) und ein Innengewinde (F2) aufweisen.

5. Das Ventil (10) oder Fitting von Anspruch 3 oder 4, wobei die ersten Kupplungsmittel und/oder die zweiten Kupplungsmittel eine Schnappsitzkupplung aufweisen.

6. Das Ventil (10) oder Fitting von einem der vorhergehenden Ansprüche, wobei der erste (A) und der zweite Durchmesser (B) einen jeweiligen Wert haben, der unter den Normdurchmessern ausgewählt ist, die in Hydraulikanlagen verwendet werden: 12,7mm (1/2"), 6,35mm (1/4"), 19,05mm (3/4"), 9,525mm (3/8"), 25,4mm (1 ").

7. Das Ventil (10) oder Fitting von einem der vorhergehenden Ansprüche, wobei der erste Durchmesser (A) und der zweite Durchmesser (B) ein Paar von Durchmessern repräsentieren, die unter den folgenden Durchmesserpaaren ausgewählt sind: 12,7mm x 9,525mm (1/2" x 3/8"), 12,7 x 6,35mm (1/2" x 1/4"), 19,05mm x 12,7mm (3/4" x 1/2"), 25,4mm x 12,7mm (1" x 1/2"), 19,05mm x 9,525mm (3/4" x 3/8"), 19,05mm x 6,35mm (3/4" x 1/4"), 9,525mm x 6,35mm (3/8" x 1/4"), 25,4mm x 19,05mm (1" x 3/4").

8. Das Ventil (10) oder Fitting von einem der vorhergehenden Ansprüche, wobei die erste Öffnung (11) und die zweite Öffnung (12) Einlass-/Auslassöffnungen sind, die geeignet sind, um den Durchtritt einer Flüssigkeit, insbesondere Wasser, durch das Ventil (10) oder Fitting zu ermöglichen.

9. Das Ventil (10) oder Fitting von einem der vorhergehenden Ansprüche, wobei die erste Öffnung zur Verbindung mit einem Rohr geeignet ist, das mit einer Wassernetzversorgung oder einer Heiznetzquelle verbunden ist, um von dort Wasser aufzunehmen, und die zweite Öffnung zur Verbindung mit einer Benutzervorrichtung bestimmt ist, z.B. einem Heizsystem oder einem Konvektionsheizer oder Radiator, um diese mit Wasser zu versorgen, das im Einlass durch die erste Öffnung aufgenommen wird.

10. Das Ventil (10) oder Fitting von einem der vorhergehenden Ansprüche, wobei die erste Öffnung und die zweite Öffnung jeweils eine Innengewindeverbindung (F3) und eine Außengewindeverbindung (F4) oder umgekehrt aufweisen, deren jede zur Verbindung mit einem jeweiligen Rohr oder Mundstück bestimmt ist, und/oder wobei der erste Durchmesser (A) und der zweite Durchmesser (B) dem Durchmesser von Rohren entsprechen, die mit der ersten Öffnung und oder der zweiten Öffnung in Eingriff bringbar sind.

11. Das Ventil (10) oder Fitting von einem der vorhergehenden Ansprüche, wobei der rohrförmige Körper (2) einen Kragen (7) aufweist, der sich radial von dem rohrförmigen Körper zur Außenseite hin erstreckt, bevorzugt entsprechend dem ersten Ende (2a) oder dem zweiten Ende (2b) des rohrförmigen Körpers, und/oder wobei das Adapterelement ein erstes Dichtungselement (8) aufweist, das außen auf den rohrförmigen Körper (2) gewickelt ist, bevorzugt entsprechend dem Kragen (7), wobei das erste Dichtungselement (8) derart strukturiert ist, dass es eine flüssigkeitsdichte Verbindung zwischen den ersten Kupplungsmitteln (5) und der ersten Öffnung (11) garantiert, wenn das Adapterelement innen mit der ersten Öffnung des Ventils oder Fittings gekoppelt ist, oder um eine flüssigkeitsdichte Verbindung zwischen den ersten Kupplungsmitteln (5) und der Innenseite eines damit koppelbaren Rohrs zu garantieren, wenn das Adapterelement außen mit der zweiten Öffnung (12) des Ventils oder Fittings gekoppelt ist, wobei das erste Dichtungselement (8) bevorzugt eine Dichtung oder ein O-Ring ist.

12. Das Ventil (10) oder Fitting von einem der vorhergehenden Ansprüche, wobei der Körper (13) des Ventils oder Fittings ein zweites Dichtungselement (18) aufweist, das eine zweite Öffnung (12) außen umgibt, die außen den zweite Durchmesser (B) aufzeigt, wobei das zweite Dichtungselement (18) derart strukturiert ist, dass es eine flüssigkeitsdichte Verbindung zwischen der zweiten Öffnung (12) und der Innenseite eines damit gekoppelten Rohrs garantiert, wenn das Adapterelement in der ersten Konfiguration ist, oder eine flüssigkeitsdichte Verbindung zwischen den zweiten Kupplungsmitteln (6), die den zweiten Durchmesser aufweisen, und der zweiten Öffnung (12) garantiert, wenn das Adapterelement in der zweiten Konfiguration ist, wobei das zweite Dichtungselement (18) bevorzugt eine Dichtung oder ein O-Ring ist.

13. Das Ventil (10) oder Fitting von einem der vorhergehenden Ansprüche, wobei das Ventil ein wenigstens 2-Wege-Ventil oder ein Thermostatventil oder ein manuelles Ventil oder ein Ablassventil oder ein zumindest 2-Wege-Fitting ist, und/oder wobei das Ventil oder Fitting vom hydraulischen Typ ist.

14. Das Ventil (10) oder Fitting von einem der vorhergehenden Ansprüche, wobei das Ventil eine Ventilvorrichtung (14) oder eine Gewindevorrichtung aufweist, die innen in dem Körper (13) des Ventils aufgenommen und konfiguriert und vordisponiert ist, um den Fluss einer Flüssigkeit, insbesondere Wasser, zu regulieren, die durch den Körper des Ventils von der ersten Öffnung (11) zu der zweiten Öffnung (12) und/oder umgekehrt hindurchtritt.

15. Verfahren zum Modifizieren und Ausbilden der Öffnungsdurchmesser eines Ventils (10) oder Fittings, welches die Schritte aufweist:
- Vordisponieren eines Ventils (10) oder Fittings gemäß einem der vorhergehenden Ansprüche;
- selektives Anordnen des Adapterelements (1) in einer ersten Konfiguration, in der es entfernbar innen mit der ersten Öffnung (11) derart gekoppelt ist, dass die erste und die zweite Öffnung des Ventilkörpers beide den zweiten Durchmesser (B) aufzeigen, oder in einer zweiten Konfiguration, in der es entfernbar außen mit der zweiten Öffnung (12) derart gekoppelt ist, dass die erste und die zweite Öffnung des Ventilkörpers beide den ersten Durchmesser (A) aufzeigen, und
- um den Durchmesser der ersten Öffnung und der zweiten Öffnung von dem ersten Durchmesser (A) und dem zweiten Durchmesser (B) oder umgekehrt zu modifizieren, ggf. Entfernen des Adapterelements (1) von dem Körper (13) des Ventils oder des Fittings, und Wiederanordnen des Adapterelements (11) in der erste Konfiguration oder der zweite Konfiguration.

## Revendications

1. Vanne (10) ou raccord comprenant :
- un corps (13) de la vanne ou du raccord prévu au moins avec une première ouverture (11) présentant au plan interne un premier diamètre (A) et avec une seconde ouverture (12) présentant au plan externe un second diamètre (B),
- un élément adaptateur (1) pouvant être couplé de manière amovible et sélective à ladite première ouverture (11) ou à ladite seconde ouverture (12) de la vanne (10) ou du raccord,
caractérisé(e) en ce que ledit élément adaptateur peut être sélectivement localisé en une première configuration, dans laquelle il est couplé, d'une manière amovible, au plan interne à ladite première ouverture (11) d'une manière telle que la première et la seconde ouvertures du corps de vanne présentent toutes deux ledit second diamètre (B), ou en une seconde configuration, dans laquelle il est couplé, d'une manière amovible, au plan externe à ladite seconde ouverture (12) d'une manière telle que la première et la seconde ouvertures du corps de vanne présentent toutes deux ledit premier diamètre (A),
ledit élément adaptateur (1) étant sélectivement démontable de, et remontable au niveau, de ladite première ouverture (11) ou ladite seconde ouverture (12) afin de passer de ladite première à ladite seconde configuration fonctionnelle ou vice versa.

2. Vanne (10) ou raccord selon la revendication précédente, le second diamètre (B) étant inférieur au premier diamètre (A).

3. Vanne (10) ou raccord selon la revendication 1 ou 2, l'élément adaptateur (1) comprenant un corps tubulaire (2) prévu avec une cavité traversante (3) s'étendant longitudinalement entre une première extrémité (2a) et une seconde extrémité (2b) du corps tubulaire, ledit corps tubulaire étant prévu au plan externe avec de premiers moyens d'accouplement (5), présentant un diamètre correspondant au premier diamètre (A), et au plan interne avec de seconds moyens d'accouplement (6) présentant un diamètre correspondant au second diamètre (B), où lesdits premiers moyens d'accouplement (5) sont configurés pour le couplage au plan interne, d'une manière amovible, à ladite première ouverture (11) de la vanne ou du raccord d'une manière telle que l'élément adaptateur soit associé à ladite première ouverture et la première ouverture présente, en résultat de l'accouplement audit élément adaptateur, un diamètre interne égal audit second diamètre (B) et défini par lesdits seconds moyens d'accouplement (6), ladite seconde ouverture se poursuivant pour présenter au plan externe ledit second diamètre (B), et où lesdits seconds moyens d'accouplement (6) sont configurés pour le couplage au plan externe, d'une manière amovible, à ladite seconde ouverture (12) de la vanne ou du raccord d'une manière telle que ledit élément adaptateur soit associé à ladite seconde ouverture et la seconde ouverture présente, en résultat de l'accouplement audit élément adaptateur, un diamètre externe égal audit premier diamètre (A) et défini par lesdits premiers moyens d'accouplement (5), ladite première ouverture se poursuivant pour présenter au plan interne ledit premier diamètre (A), ledit élément adaptateur (1) pouvant être sélectivement couplé à ladite première ouverture (11) ou à ladite seconde ouverture (12) de la vanne ou du raccord.

4. Vanne (10) ou raccord selon la revendication précédente, lesdits premiers moyens d'accouplement (5) et/ou seconds moyens d'accouplement (6) comprenant un filetage respectif, comprenant préférablement respectivement un filetage externe (F1) et un filetage interne (F2).

5. Vanne (10) ou raccord selon la revendication 3 ou 4, les premiers moyens d'accouplement et/ou seconds moyens d'accouplement comprenant un couplage par encliquetage.

6. Vanne (10) ou raccord selon l'une quelconque des revendications précédentes, lesdits premier (A) et second diamètre (B) présentant une valeur respective qui est sélectionnée parmi les diamètres standards employés dans une installation hydraulique, 12,7 mm (1/2"), 6,35 mm (1/4"), 19,05 mm (3/4"), 9,525 mm (3/8"), 25,4 mm (1 ").

7. Vanne (10) ou raccord selon l'une quelconque des revendications précédentes, ledit premier diamètre (A) et ledit second diamètre (B) présentant une paire de diamètres sélectionnée parmi les paires suivantes de diamètres : 12,7 mm x 9,525 mm (1/2" x 3/8"), 12,7 mm x 6,35 mm (1/2" x 1/4"), 19,05 mm x 12,7 mm (3/4" x 1/2"), 25,4 mm x 12,7 mm (1" x 1/2"), 19,05 mm x 9,525 mm (3/4" x 3/8"), 19,05 mm x 6,35 mm (3/4" x 1/4"), 9,525 mm x 6,35 mm (3/8" x 1/4"), 25,4 mm x 19,05 mm (1" x 3/4").

8. Vanne (10) ou raccord selon l'une quelconque des revendications précédentes, ladite première ouverture (11) et ladite seconde ouverture (12) étant des ouvertures d'entrée/sortie convenant pour permettre le passage de liquide, en particulier d'eau, à travers ladite vanne (10) ou ledit raccord.

9. Vanne (10) ou raccord selon l'une quelconque des revendications précédentes, ladite première ouverture convenant pour être raccordée à un réseau d'approvisionnement en eau ou un réseau de chauffage pour recevoir de l'eau provenant de celui-ci et ladite seconde ouverture est destinée à être connectée à un dispositif utilisateur, par exemple un système de chauffage ou un dispositif de chauffage ou un radiateur par convection, afin de l'alimenter avec l'eau reçue dans l'orifice d'entrée par la première ouverture.

10. Vanne (10) ou raccord selon l'une quelconque des revendications précédentes, ladite première ouverture et ladite seconde ouverture comprennent respectivement au plan interne un raccord fileté (F3) et au plan externe un raccord fileté (F4), ou *vice versa,* chacun destiné à être raccordé à une conduite ou bouche respective, et/ou ledit premier diamètre (A) et ledit second diamètre (B) correspondant au diamètre des conduites pouvant être engagées dans ladite première ouverture et/ou ladite seconde ouverture.

11. Vanne (10) ou raccord selon l'une quelconque des revendications précédentes, ledit corps tubulaire (2) présentant un collier (7) s'étendant radialement depuis le corps tubulaire vers l'extérieur, préférablement en correspondance de la première extrémité (2a) ou de la seconde extrémité (2b) du corps tubulaire, et/ou l'élément adaptateur comprenant un premier élément d'étanchéité (8) enveloppé au plan externe du corps tubulaire (2), préférablement en correspondance dudit collier (7), ledit premier élément d'étanchéité (8) étant structuré afin de garantir un raccordement hermétique aux liquides entre les premiers moyens d'accouplement (5) et la première ouverture (11) lorsque l'élément adaptateur est couplé au plan interne à ladite première ouverture de la vanne ou du raccord, ou afin de garantir un raccordement hermétique aux liquides entre les premiers moyens d'accouplement (5) et l'intérieur d'une conduite pouvant être couplée à celui-ci, lorsque l'élément adaptateur est au plan externe couplé à ladite seconde ouverture (12) de la vanne ou du raccord, ledit premier élément d'étanchéité (8) étant préférablement un joint statique ou un joint torique.

12. Vanne (10) ou raccord selon l'une quelconque des revendications précédentes, ledit corps (13) de la vanne ou du raccord comprenant un second élément d'étanchéité (18) au plan externe enveloppant la seconde ouverture (12) présentant au plan externe ledit second diamètre (B), ledit second élément d'étanchéité (18) étant structuré afin de garantir un raccordement hermétique aux liquides entre la seconde ouverture (12) et l'intérieur d'une conduite couplée à celui-ci, lorsque l'élément adaptateur se trouve en première configuration, ou de garantir un raccordement hermétique aux liquides entre les seconds moyens d'accouplement (6), présentant ledit second diamètre, et la seconde ouverture (12) lorsque l'élément adaptateur se trouve en seconde configuration, ledit second élément d'étanchéité (18) étant préférablement un joint statique ou un joint torique.

13. Vanne (10) ou raccord selon l'une quelconque des revendications précédentes, ladite vanne étant au moins une vanne double voie ou une vanne à thermostat ou une vanne manuelle ou une vanne de vidange ou au moins un raccord double voie, et/ou ladite vanne ou ledit raccord étant de type hydraulique.

14. Vanne (10) ou raccord selon l'une quelconque des revendications précédentes, ladite vanne comprenant un dispositif de vanne (14), ou dispositif de type vissé, au plan interne logé dans ledit corps (13) de la vanne et configuré et prédisposé pour la régulation de l'écoulement d'un liquide, en particulier d'eau, passant à travers ledit corps de la vanne depuis ladite première ouverture (11) jusqu'à ladite seconde ouverture (12) et /ou *vice versa.*

15. Procédé de modification et de sélection des diamètres d'une vanne (10) ou d'un raccord, comprenant les étapes de :
- pré-disposition d'une vanne (10) ou d'un raccord selon l'une quelconque des revendications précédentes ;
- localisation sélectivement dudit élément adaptateur (1) en une première configuration, dans laquelle il est couplé, d'une manière amovible, au plan interne à la première ouverture (11) d'une manière telle que la première et la seconde ouvertures du corps de vanne présentent toutes deux le second diamètre (B), ou en une seconde configuration, dans laquelle il est couplé, d'une manière amovible, au plan externe à la seconde ouverture (12) d'une manière telle que la première et la seconde ouvertures du corps de vanne présentent toutes deux le premier diamètre (A) et
- afin de modifier le diamètre de la première ouverture et de la seconde ouverture du premier diamètre (A) au second diamètre (B) ou *vice versa,* l'élimination éventuelle dudit élément adaptateur (1) du corps (13) de la vanne ou du raccord et la re-localisation dudit élément adaptateur (1) en ladite première configuration ou ladite seconde configuration.
